# FASCICULE DE BREVET EUROPEEN

(11) **EP 1 352 880 B1**
(45) Date de publication et mention de la délivrance du brevet: **21.06.2006**
(21) Numéro de dépôt: 03290743.8
(22) Date de dépôt: 25.03.2003
(51) Int. Cl.: C03B 37/027

(54) **Tube de refroidissement de fibre optique**
Kühlungsrohr für eine optische Faser
Cooling tube for an optical fibre

(30) Priorité: 08.04.2002 FR 0204344
(43) Date de publication de la demande: 15.10.2003
(73) Titulaire: Draka Comteq B.V., 1018 TX Amsterdam (NL)
(72) Inventeur: Leon, Aurélien, 75003 Paris (FR); Tschumperle, Denis, 78700 Conflans (FR); Schuepbach, Olivier, Hickory, NC 28601 (US); Bourhis, Jean-François, 95150 Taverny (FR)
(74) Mandataire: Blokland, Arie

(56) Documents cités:
- EP-A- 0 579 388
- DE-A- 3 910 252
- US-A- 4 761 168
- PATENT ABSTRACTS OF JAPAN vol. 1998, no. 09, 31 juillet 1998 (1998-07-31) -& JP 10 101360 A (YAZAKI CORP), 21 avril 1998 (1998-04-21)
- PATENT ABSTRACTS OF JAPAN vol. 15, no. 221, 6 juin 1991 (1991-06-06) & JP 03 065535 A (SUMITOMO ELECTRIC IND LTD), 20 mars 1991 (1991-03-20)

## Description

L'invention concerne le domaine des tubes de refroidissement de fibre optique, c'est-à-dire le domaine des tubes de refroidissement destinés à refroidir les fibres optiques lors de leur fibrage. La fibre optique est obtenue par fibrage à partir d'une préforme placée dans un four. A la sortie du four, la fibre optique possède une température très élevée et ne peut pas être refroidie rapidement avant que sa température ne soit déjà descendue aux environs de 600°C. Par ailleurs, la fibre optique doit encore recevoir un revêtement qui ne peut être appliqué que lorsque la température de la fibre optique est descendue au-dessous de 100°C, typiquement vers 70°C. La fonction du tube de refroidissement, lequel tube est généralement situé entre la sortie du four et le dispositif d'application du revêtement sur la fibre optique, est de refroidir beaucoup, typiquement de 500°C à moins de 100°C, la fibre optique et ce sur une faible distance, typiquement moins de 4m, voire 2m, pour une fibre optique dont la vitesse de fibrage peut atteindre une valeur élevée, par exemple supérieure ou égale à 1500 mpm (mètres par minute). Lors du fibrage, compte tenu de la faible longueur de refroidissement et de la vitesse de fibrage élevée, le temps pendant lequel la fibre optique traverse le tube de refroidissement est très faible, typiquement de l'ordre de quelques dixièmes de seconde, ce qui implique l'utilisation de tubes de refroidissement particulièrement efficaces. Ces tubes de refroidissement utilisent la circulation d'un fluide gazeux de conductivité thermique plus élevée que celle de l'air, typiquement de l'hélium, mais d'autres fluides gazeux peuvent être envisageables. Plus la vitesse de fibrage est élevée, plus le débit d'hélium nécessaire pour une efficacité donnée de refroidissement est élevé.

Selon un premier art antérieur, pour une faible vitesse de fibrage, le tube de refroidissement consiste en une cavité filiforme entourant la fibre optique sur une distance de 3m à 4m, de l'hélium étant injecté à l'entrée de cette cavité. La consommation en hélium reste raisonnable et ne dépasse pas quelques dizaines de litres par minute. Cependant, ce genre de tube est long et devient inefficace lorsque la vitesse de fibrage augmente.

Selon un deuxième art antérieur, décrit par exemple dans le brevet US4761168, pour une vitesse de fibrage plus élevée, il est proposé une structure particulière de tube de refroidissement dont la large cavité est hérissée de picots destinées à perturber la couche limite véhiculée par la fibre optique, plus simplement appelée couche limite. En effet, lors du fibrage, la fibre optique traverse le tube de refroidissement à une certaine vitesse et entraîne en son voisinage immédiat une couche de gaz qui l'accompagne en se déplaçant approximativement à la même vitesse ; c'est cette couche de gaz qui est appelée couche limite et dont l'étendue dépend notamment de la vitesse de fibrage. Cette couche limite a l'inconvénient d'une part d'être majoritairement constituée d'air dont la conductivité thermique est inférieure à celle de l'hélium et d'autre part de peu se mêler par diffusion au reste du gaz situé entre la fibre optique et les parois de la cavité du tube de refroidissement, ce qui diminue grandement l'efficacité des échanges thermiques entre la fibre optique et l'hélium injecté. Cependant, pour des vitesses de fibrage élevées, typiquement comprises entre 1500mpm et 1800mpm, le refroidissement requiert rapidement une quantité d'hélium consommée prohibitive, à supposer que ledit refroidissement puisse rester suffisamment efficace sur une faible distance de refroidissement.

Selon un troisième art antérieur décrit dans JP 10-101 360 il est proposée une structure particulière de tube de refroidissement comprenant une cavité interne destinée à être traversée par une fibre optique et un ensemble de canaux d'injection qui sont répartis le long du tube, qui débouchent dans la cavité et qui sont orientés à contre-courant par rapport au sens de défilement de la fibre optique.

L'invention propose une solution basée sur un tube de refroidissement à efficacité de refroidissement améliorée particulièrement utile à des vitesses de fibrage élevées. Ce tube de refroidissement présente une structure particulière permettant de réaliser une injection d'hélium qui est répétée le long du tube et qui est à contre-courant du sens de défilement de la fibre optique.

Selon l'invention, il est prévu un tube de refroidissement de fibre optique comprenant une cavité interne destinée à être traversée par une fibre optique et un ensemble de canaux d'injection qui sont répartis le long du tube, qui débouchent dans la cavité et qui sont orientés à contre-courant par rapport au sens de défilement de la fibre optique , caractérisé en ce que les canaux d'injection sont alternée avec des canaux d'aspiration tous orientés à contre-courant du sens de
défilement de la fibre optique.

Pour que la quantité d'hélium injectée ait une efficacité optimisée au niveau des échanges thermiques avec la fibre optique, c'est-à-dire pour permettre le plus tôt et le plus souvent possible de remplacer l'air d'abord puis l'hélium chaud ensuite par de l'hélium froid, la structure particulière du tube de

refroidissement selon l'invention comporte soit les deux de manière optimale, soit au moins une des deux caractéristiques suivantes, à savoir d'une part la proximité des parois de la cavité avec la couche limite au niveau des canaux d'injection afin d'injecter plus efficacement l'hélium froid et d'autre part une alternance entre les canaux d'injection et des canaux d'aspiration tous orientés à contre-courant du sens de défilement de la fibre optique afin d'aspirer plus efficacement l'air ou l'hélium chaud, cette alternance étant associée à un faible nombre d'ouvertures sur l'extérieur de façon à peu réintroduire d'air dans le tube de refroidissement. Le tube de refroidissement proposé pourra être soit aussi long et plus efficace que ceux de l'art antérieur soit moins long et aussi efficace que ceux de l'art antérieur, soit encore un compromis intermédiaire entre les deux possibilités précédemment évoquées. Un tube de refroidissement court est avantageux car il permet une diminution de la hauteur nécessaire pour la tour de fibrage.

Selon l'invention, il est de préférence de plus prévu, que la section droite de la cavité soit suffisamment étroite au niveau des canaux d'injection pour que la surface extérieure de la couche limite de fluide gazeux véhiculée par la fibre optique y soit plus proche des parois de la cavité que de la surface extérieure de la fibre optique, ainsi que la présence d'un ensemble de canaux d'aspiration qui sont répartis le long du tube, qui débouchent dans la cavité et qui sont orientés à contre-courant du sens de défilement de la fibre optique, les groupes d'injection, au moins au nombre de trois et comprenant chacun un ou plusieurs canaux d'injection, alternant le long du tube avec les groupes d'aspiration, au moins au nombre de trois et comprenant chacun un ou plusieurs canaux d'aspiration, les seules ouvertures du tube sur l'extérieur étant les canaux d'injection, les canaux d'aspiration et les extrémités du tube.

De manière alternative, selon l'invention, il est de plus prévu que la section droite de la cavité soit suffisamment étroite au niveau des canaux d'injection pour que, lors du fonctionnement du tube, la surface extérieure de la couche limite de fluide gazeux véhiculée par la fibre optique y soit plus proche des parois de la cavité que de la surface extérieure de la fibre optique.

De manière alternative également, selon l'invention, il est de plus prévu la présence d'un ensemble de canaux d'aspiration qui sont répartis le long du tube, qui débouchent dans la cavité et qui sont orientés à contre-courant du sens de défilement de la fibre optique, les groupes d'injection, au moins au nombre de trois et comprenant chacun un ou plusieurs canaux d'injection, alternant le long du tube avec les groupes d'aspiration, au moins au nombre de trois et comprenant chacun un ou plusieurs canaux d'aspiration, les seules ouvertures du tube sur l'extérieur étant les canaux d'injection, les canaux d'aspiration et les extrémités du tube.

L'invention sera mieux comprise et d'autres particularités et avantages apparaîtront à l'aide de la description ci-après et des dessins joints, donnés à titre d'exemples, où :
- la figure 1 représente schématiquement un exemple préférentiel de tube de refroidissement selon l'invention constitué par l'empilement de plusieurs modules ;
- la figure 2 représente schématiquement l'un des modules du tube de refroidissement représenté à la figure 1 ;
- la figure 3 représente schématiquement l'évolution, le long d'un exemple de tube de refroidissement selon l'invention, de l'efficacité des échanges thermiques entre la fibre optique et le fluide gazeux environnant.

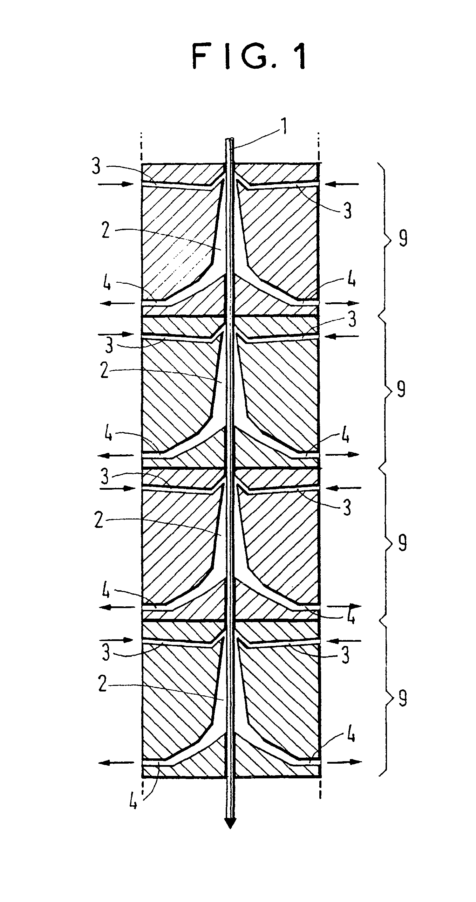

La figure 1 représente schématiquement un exemple préférentiel de tube de refroidissement selon l'invention constitué par l'empilement de plusieurs modules. Sur la figure 1, seulement quatre modules sont représentés pour des raisons de clarté et de simplicité, mais un tube de refroidissement réel en contiendra souvent plus, avantageusement une douzaine pour une longueur de tube d'environ un demi-mètre. Lors du fonctionnement du tube, une fibre optique 1 traverse le tube de refroidissement de haut en bas, la flèche au bout de la fibre optique 1 indiquant son sens de défilement qui est du haut du bas comme représenté sur la figure 1. La fibre optique 1 se déplace dans une cavité interne 2 du tube de refroidissement. Les modules 9 sont assemblés les uns aux autres de manière à rendre les interfaces entre modules étanches à l'air extérieur qui est l'air ambiant, par exemple à l'aide d'un système de joints disposés aux interfaces entre les modules 9. Le système tenon mortaise ainsi que le système de joint, connus en soi, ne sont pas représentés sur la figure 1 pour des raisons de clarté et de simplicité. L'air extérieur peut toutefois rentrer dans la cavité interne 2 au niveau des extrémités du tube de refroidissement, c'est-à-dire au niveau d'une part de l'entrée de la fibre optique 1 dans le premier module 9 et d'autre part au niveau de la sortie de la fibre optique 1 du dernier module 9. Ce découpage du tube de refroidissement en plusieurs et même en nombreux modules 9 de taille réduite est avantageux, tant au niveau de la facilité de fabrication des modules 9 élémentaires qu'au niveau de l'installation de tubes de refroidissement dont la longueur peut être choisie par le nombre de modules 9 mis bout à bout et qu'au niveau de la maintenance du tube de refroidissement. Chaque module 9 comporte plusieurs canaux 3 d'injection qui débouchent dans la chambre 2 au niveau de leur orifice, qui ont la même position axiale par rapport au tube et qui ont une position radiale régulièrement distribuée par rapport au tube, c'est-à-dire que dans un plan de coupe perpendiculaire à la fibre optique 1, la répartition des canaux 3 d'injection présente une symétrie axiale par rapport à la fibre optique 1, et dont l'ensemble constitue un groupe d'injection. Sur la figure 1, chaque module ne comporte qu'un seul groupe d'injection lui-même comportant deux canaux 3 d'injection. Les canaux 3 d'injection sont orientés à contre-courant du sens de défilement de la fibre optique 1, en effet, ils sont plutôt orientés vers le haut que vers le bas. Les canaux 3 d'injection sont orientés à contre-courant du sens de défilement de la fibre optique 1 pour mieux casser la couche limite et mieux remplacer notamment au niveau de la couche limite l'air ou l'hélium chaud par de l'hélium froid. L'hélium froid est par exemple de l'hélium à température ambiante, c'est-à-dire à la température du milieu extérieur au tube de refroidissement. Chaque module 9 comporte plusieurs canaux 4 d'aspiration qui débouchent dans la chambre 2 au niveau de leur orifice, qui ont la même position axiale par rapport au tube et qui ont une position radiale régulièrement distribuée par rapport au tube et dont l'ensemble constitue un groupe d'aspiration. Sur la figure 1, chaque module ne comporte qu'un seul groupe d'aspiration lui-même comportant deux canaux 4 d'aspiration. Les canaux d'aspiration sont orientés à contre-courant du sens de défilement de la fibre optique 1, en effet, ils sont plutôt orientés vers le haut que vers le bas. Les canaux 4 d'aspiration sont orientés à contre-courant du sens de défilement de la fibre optique 1 pour évacuer plus efficacement l'air ou l'hélium chaud restant notamment au niveau de la couche limite. Les canaux 3 d'injection sont orientés dans le même sens que les canaux 4 d'aspiration. L'ensemble des canaux 3 d'injection situés d'un même côté du tube, par exemple à gauche ou à droite de la fibre optique 1, est de préférence relié à un même canal d'alimentation non représenté sur la figure 1. L'ensemble des canaux 4 d'aspiration situés d'un même côté du tube, par exemple à gauche ou à droite de la fibre optique 1, est de préférence relié à un même canal d'évacuation non représenté sur la figure 1.

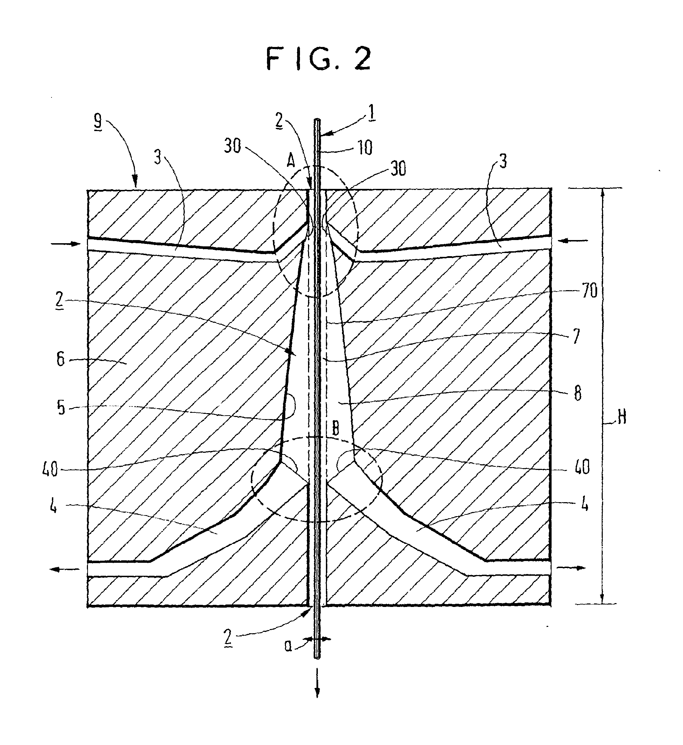

La figure 2 représente schématiquement l'un des modules du tube de refroidissement représenté à la figure 1. La vue représentée est une coupe. Le module représenté en coupe présente une symétrie axiale d'axe la fibre optique 1, sa forme extérieure pouvant être par exemple parallélépipédique ou cylindrique. Le sens de circulation du fluide gazeux dans les canaux 3 d'injection et dans les canaux 4 d'aspiration est indiqué par des flèches. Lors du fonctionnement du tube de refroidissement, une fibre optique 1 de surface extérieure 10 traverse le module représenté à la figure 2 au niveau de son axe de symétrie. Ce module est constitué d'un matériau 6 qui est bon conducteur thermique comme par exemple un métal et qui est traversé de haut en bas par une cavité interne 2 dont la section peut varier le long de l'axe du module. Du haut vers le bas, la cavité interne 2 est d'abord de section constante et étroite, puis s'élargit au niveau des orifices 30 des canaux 3 d'injection pour former une chambre 8, et enfin se rétrécit de nouveau au niveau des orifices 40 des canaux 4 d'aspiration pour rester constante jusqu'à la sortie du module. La section droite de la cavité interne 2 est la section de la cavité dans un plan perpendiculaire à la fibre optique 1. Les traits pointillés 7 symbolisent la couche limite véhiculée par la fibre optique 1 en mouvement vers le bas comme l'indique la flèche située au bout de la fibre optique 1. Sur le module de la figure 2, la section de la cavité interne 2 est de l'ordre de grandeur de celle de la couche limite 7 de surface extérieure 70. Ceci ne reste vrai que pour une gamme de vitesse de fibrage puisque la taille de la couche limite 7 augmente avec la vitesse de fibrage, ici la section de la cavité interne 2 et de la couche limite 7 sont du même ordre de grandeur pour des vitesses de tirage supérieures ou égales à 1500mpm. La surface extérieure 70 de la couche limite 7 est donc nettement plus proche des parois 5 de la cavité 2 que de la surface extérieure 10 de la fibre optique 1. Les canaux 3 d'injection sont coudés et orientés à contre-courant au niveau de leur orifice 30 lorsqu'ils débouchent au niveau des parois 5 de la cavité interne 2. Les parois 5 de la cavité interne 2, tout comme les parois des canaux 3 d'injection et des canaux 4 d'aspiration, sont refroidis par une circulation de fluide liquide froid, par exemple de l'eau froide, dans le matériau 6 non représentée ici car connue en soi. Les canaux 4 d'aspiration sont coudés et orientés à contre-courant au niveau de leur orifice 40 lorsqu'ils débouchent au niveau des parois 5 de la cavité interne 2. A leur arrivée dans la cavité interne 2, les canaux 3 d'injection comme les canaux 4 d'aspiration font un angle d'environ 45 degrés avec la fibre optique 1. La zone A matérialisée par des traits pointillés est la zone d'injection tandis que la zone B matérialisée par des traits pointillés est la zone d'aspiration.

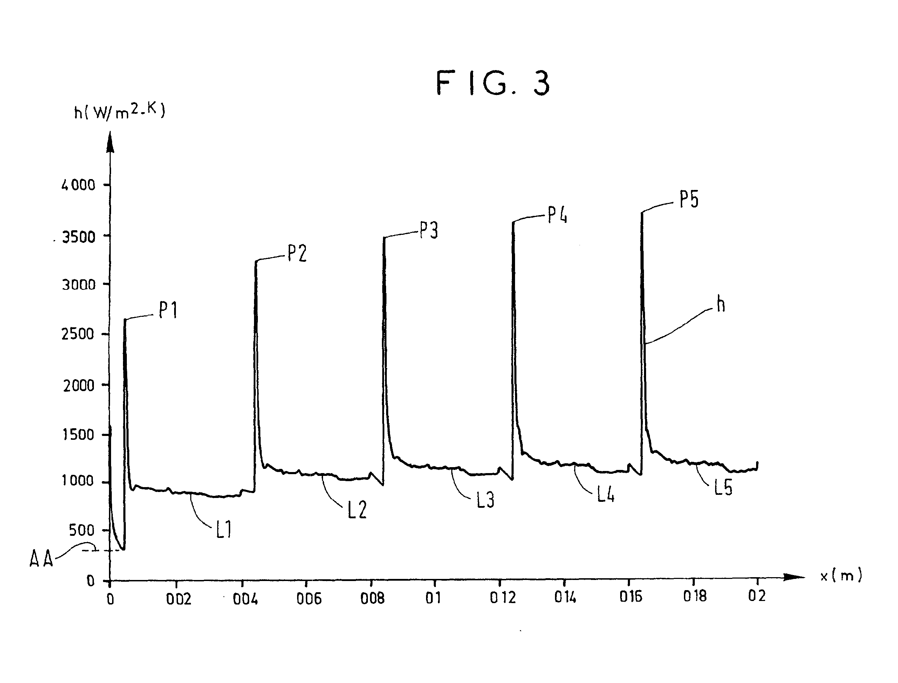

Lors du fonctionnement du tube de refroidissement, les circulations des fluides gazeux sont les suivantes à l'intérieur d'un module. Une portion de fibre optique 1 entre dans la cavité interne 2 entraînant avec elle une portion de couche limite 7 qui l'entoure. Cette couche limite 7 est constituée d'air à l'entrée du premier module, d'un mélange d'air et d'hélium chaud à l'entrée des deuxième et troisième modules, d'hélium chaud avec au plus des traces d'air à l'entrée du quatrième module ainsi que des modules suivants à l'exception éventuellement des deux ou trois derniers modules du tube au niveau desquels l'air est susceptible de pénétrer en entrant par le bas du tube. De l'hélium froid est injecté dans les canaux 3 d'injection et débouche par les orifices 30 à l'entrée de la chambre 8 au voisinage de la fibre optique 1, c'est-à-dire au niveau de la zone A. L'hélium froid en provenance des canaux 3 d'injection casse la couche limite 7 et remplace au niveau de ladite couche limite 7 en grande partie l'air et ou l'hélium chaud qui s'y trouvent. Dans la chambre 8, la présence d'hélium froid dans la couche limite 7 améliore nettement l'efficacité des échanges thermiques entre la fibre optique 1 et son environnement gazeux. A la sortie de la chambre 8, c'est-à-dire au niveau de la zone B, l'hélium froid qui avait été injecté dans la couche limite 7 à l'entrée de la chambre 8 et qui s'est répandu dans la chambre 8 est devenu de l'hélium chaud et il est aspiré en partie de manière à quitter la chambre 8 pour aller dans les canaux 4 d'aspiration en traversant les orifices 40. Seule une partie de l'hélium chaud reste au niveau de la couche limite 7 et continue dans la cavité interne 2 vers le bas en direction de l'entrée du module suivant. La présence d'une chambre 8 représentant un élargissement de la section de la cavité interne 2 permet d'optimiser l'efficacité des canaux 4 d'aspiration au niveau de la zone B ; cependant une section constante de la cavité interne 2 sur toute la hauteur du module, à l'exception près des zones A et B où la présence de canaux produit un élargissement, est également envisageable et correspond aux résultats de la figure 3, cette section constante permettant une meilleure injection de l'hélium froid, c'est-à-dire une meilleure pénétration de l'hélium froid dans la couche limite 7, au détriment toutefois d'une certaine diminution de l'efficacité de l'aspiration de l'hélium chaud au niveau de la zone B. Dans un exemple numérique préférentiel, la hauteur H d'un module vaut environ 40mm tandis que le diamètre a de la couche limite 7 vaut environ 2mm pour une fibre optique 1 de diamètre valant 125µm et défilant à une vitesse d'environ 1500mpm à 1800mpm, voire à une vitesse supérieure. La taille de la couche limite 7 dépend notamment de la vitesse de fibrage ainsi que de la taille de la cavité 2 qui confine la couche limite 7. Les orifices des canaux 3 d'injection et des canaux 4 d'aspiration sont circulaires, le diamètre des canaux d'injection valant 0,5mm. La section de chaque canal 3 d'injection au niveau de son orifice 30 est inférieure à la section droite de la couche limite 7.

La figure 3 représente schématiquement l'évolution, le long d'un exemple de tube de refroidissement selon l'invention, de l'efficacité des échanges thermiques entre la fibre optique et l'hélium environnant. Sur la courbe de la figure 3, les points de la courbe sont représentés par de petits cercles. L'axe des abscisses représente la hauteur x exprimée en mètres le long de l'axe du tube de refroidissement, c'est-à-dire le long de la fibre optique 1. La courbe h représente les 20 premiers centimètres le long du tube de refroidissement. La courbe h est une simulation et ne représente pas des mesures réelles. L'efficacité h est exprimée en Watt par mètre carré Kelvin. L'efficacité globale de la portion de tube représentée est en fait directement liée à l'aire de la courbe h représentée, c'est-à-dire à son intégrale. La courbe h correspond à une hauteur de module de 40mm, à une vitesse de fibrage de 1800mpm, à un débit d'injection de 10 Ipm (litres par minutes) et à un débit d'aspiration de 5 Ipm pour un tube de 12 modules. La courbe h présente plusieurs pics P1 à P5 et plusieurs plateaux L1 à L5 légèrement descendants. Les pics P1 à P5 correspondent aux zones A d'injection où les canaux 3 d'injection débouchent dans la cavité interne 2. Le fait de casser la couche limite 7 permet au niveau des zones A d'injection d'hélium froid une efficacité beaucoup plus élevée qu'ailleurs mais sur une courte distance, les pics P1 à P5 étant beaucoup plus élevés que les plateaux L1 à L5 mais également beaucoup plus étroits. Le niveau des pics ainsi que le niveau moyen des plateaux est de plus en plus élevé au fur et à mesure que l'on progresse dans le tube, c'est-à-dire par exemple que le pic P3 est plus élevé que le pic P2 lui-même plus élevé que le pic P1 et que le niveau moyen du plateau L3 est plus élevé que le niveau moyen du plateau L2 lui-même plus élevé que le niveau moyen du plateau L1 ; le gain d'un plateau à l'autre est de moins en moins élevé et semble devenir négligeable après le troisième plateau L3. L'élévation du niveau moyen des plateaux L1 à L3 correspond au remplacement dans la couche limite 7 de l'air par de l'hélium ; à partir du quatrième module l'air semble avoir pratiquement disparu de la cavité interne 2. Un tube selon le deuxième art antérieur aurait l'efficacité du niveau AA, il serait donc approximativement quatre fois moins efficace que le tube de refroidissement selon l'invention. A efficacité équivalente à celle du tube selon le deuxième art antérieur, la consommation d'Hélium peut être par exemple divisée par six, voire éventuellement plus.

Le deuxième art antérieur était basé sur l'idée de perturber la couche limite 7 tandis que l'un des principes de l'invention est de casser la couche limite 7 de façon à remplacer surtout au niveau de cette couche limite 7 dans une proportion importante et plusieurs fois, de préférence régulièrement, le long du tube l'ancien fluide constitué d'air et/ou d'hélium chaud par du nouveau fluide constitué d'hélium froid. Les canaux d'injection sont répartis le long du tube, c'est-à-dire qu'ils occupent différentes positions axiales ou le long du tube, ils sont de préférence régulièrement répartis le long du tube, c'est-à-dire que leur espacement axial ou le long du tube est périodique. On rappelle que l'hélium peut être remplacé par un autre fluide gazeux dont la conductivité thermique est plus élevée que l'air et dont la température à laquelle il est injecté est substantiellement inférieure à celle de l'air. A une vitesse de fibrage de 1500mpm, ce qui correspond à une température d'entrée dans le tube de refroidissement d'environ 600°C, un ensemble de tubes selon le deuxième art antérieur s'étendant sur 2m de long a besoin d'un débit d'environ 250lpm pour refroidir correctement la fibre optique tandis qu'un ensemble de tubes selon invention s'étendant sur 2m ne nécessite pour une efficacité comparable qu'environ 40lpm ce qui correspond à titre de comparaison à une longueur équivalente de refroidissement dans l'air ambiant de 7m ; il semble nettement plus efficace de casser la couche limite que de simplement la perturber. Il est aussi possible pour conserver une efficacité comparable, d'augmenter le débit dans l'ensemble de tubes selon l'invention mais de raccourcir sa longueur à 1,5m par exemple en n'utilisant plus que 3 tubes d'environ un demi-mètre chacun mis bout à bout au lieu de 4. Une longueur plus faible de refroidissement permettrait alors de diminuer la hauteur de la tour de fibrage d'autant.

Dans un premier mode de réalisation préférentiel de l'invention, d'une part la section droite de la cavité 2 est suffisamment étroite au niveau des canaux 3 d'injection pour que la surface extérieure 70 de la couche limite 7 de fluide gazeux véhiculée par la fibre optique 1 y soit plus proche des parois 5 de la cavité 8 que de la surface extérieure 10 de la fibre optique 1 et d'autre part le tube comprend aussi un ensemble de canaux 4 d'aspiration qui sont répartis le long du tube, qui débouchent dans la cavité 2 et qui sont orientés à contre-courant par rapport au sens de défilement de la fibre optique 1, les groupes d'injection, au moins au nombre de trois et comprenant chacun un ou plusieurs canaux 3 d'injection, alternant le long du tube avec les groupes d'aspiration, au moins au nombre de trois et comprenant chacun un ou plusieurs canaux 4 d'aspiration, les seules ouvertures du tube sur l'extérieur étant les canaux 3 d'injection, les canaux 4 d'aspiration et les extrémités du tube. Dans ce premier mode de réalisation, la couche limite 7 est cassée souvent et de préférence régulièrement par les canaux 3 d'injection et les canaux 4 d'aspiration réalisent une aspiration répétée et de préférence régulière d'une partie importante de la couche limite 7. Ainsi, surtout au niveau de la couche limite 7, tout d'abord l'air est rapidement remplacé par de l'hélium, puis l'hélium chaud est de manière répétée et de préférence régulière remplacé par de l'hélium froid. La minimisation des ouvertures du tube sur l'extérieur permet de peu ou pas contaminer l'hélium circulant dans la majorité des modu!es non situés près des extrémités du tube, permettant alors soit de recycler l'hélium avec une légère opération de purification soit de le réinjecter purement et simplement sans purification, l'air étant pratiquement absent des chambres 8 correspondantes.

Dans un deuxième mode de réalisation alternatif de l'invention, la section droite de la cavité 2 est suffisamment étroite au niveau des canaux 3 d'injection pour que, lors du fonctionnement du tube, la surface extérieure 70 de la couche limite 7 de fluide gazeux véhiculée par la fibre optique 1 y soit plus proche des parois 5 de la cavité 2 que de la surface extérieure 10 de la fibre optique 1. En effet, pour que la couche limite soit cassée et pour que l'hélium froid pénètre de manière importante dans cette couche limite 7 pour se substituer à l'hélium chaud ou à l'air restant, le flux d'hélium injecté doit être rapide et proche de la fibre optique 1, les orifices 30 des canaux 3 d'injection sont pour cela d'une part de section relativement faible afin de permettre une vitesse d'injection élevée tout en conservant un débit raisonnable et d'autre part situés près de la fibre optique 1. Toutefois, si la section droite de la cavité devient excessivement faible, les très légers déplacements latéraux que peut subir la fibre optique 1 risquent de l'endommager irrémédiablement notamment en la faisant casser. Des orifices 30 situés près de la fibre optique 1 avec une section droite élevée de la cavité 2, typiquement des canaux d'injection pénétrant loin dans la cavité interne 2, donnent des résultats moins bons dans la mesure où l'épaisseur de fluide gazeux entre la fibre optique 1 est le matériau 6 du module devient importante ce qui a pour conséquence de diminuer l'efficacité des échanges thermiques entre la fibre optique 1 et le matériau 6 par l'intermédiaire de l'hélium situé entre eux. C'est pourquoi, les canaux 3 d'injection débouchent avantageusement au niveau des parois 5 de la cavité 2 et ne pénètrent pas dans la cavité 2. Dans un cas numérique préférentiel de l'invention, à une vitesse de 1500mpm, la couche limite présente un diamètre d'environ 2mm, la section droite de la cavité interne 2 qui est préférentiellement circulaire présente alors un diamètre compris entre environ 2mm et environ 3,9mm, la surface de la section droite de la cavité au niveau des canaux d'injection est alors environ comprise entre 3 mm² et 10 mm².

Dans un troisième mode de réalisation alternatif de l'invention, le tube de refroidissement comprend également un ensemble de canaux 4 d'aspiration qui sont répartis le long du tube, qui débouchent dans la cavité 2 et qui sont orientés à contre-courant par rapport au sens de défilement de la fibre optique 1, les groupes d'injection, au moins au nombre de trois et comprenant chacun un ou plusieurs canaux 3 d'injection, alternant le long du tube avec les groupes d'aspiration, au moins au nombre de trois et comprenant chacun un ou plusieurs canaux 4 d'aspiration, les seules ouvertures du tube sur l'extérieur étant les canaux 3 d'injection, les canaux 4 d'aspiration et les extrémités du tube. Un rôle des canaux 4 d'aspiration est de permettre l'évacuation de l'air restant ou de l'hélium chaud. L'alternance des groupes d'injection et des groupes d'aspiration permet d'évacuer régulièrement l'hélium chaud libérant de la place pour l'injection suivante d'hélium froid. Un autre rôle des canaux d'aspiration est de permettre un recyclage avec purification et avec refroidissement ou une simple réinjection après refroidissement de l'hélium de manière à économiser à débit d'hélium donné, la quantité d'hélium consommée car perdue par dilution à l'extérieur du tube de refroidissement. La purification consiste principalement en une élimination de l'air restant et notamment de l'oxygène restant. La réduction des ouvertures sur l'extérieur permet de ne contaminer avec de l'air la cavité interne 2 qu'aux extrémités du tube, ce qui autorise pour les modules ayant une position centrale dans le tube soit une réinjection pure et simple soit un recyclage avec une légère purification. A titre d'exemple, dans l'exemple représenté à la figure 3 lequel correspond toutefois au premier mode préférentiel de réalisation, le taux restant d'oxygène après la cinquième cellule est très faible, il est inférieur à 0,01%. Une possibilité de recyclage ou de réinjection par exemple au moins pour la moitié des modules centraux du tube est très appréciable pour réduire la consommation d'hélium à débit donné car elle contribue à diminuer notablement le coût du refroidissement et donc le coût du procédé de fibrage.

De préférence, l'orifice 30 des canaux 3 d'injection présente une forme allongée, la plus grande dimension dudit orifice 30 étant selon l'axe du tube, c'est-à-dire selon la fibre optique 1 lors du fonctionnement du tube, et la plus petite dimension dudit orifice étant selon la section droite du tube, c'est-à-dire selon une perpendiculaire à la fibre optique 1 lors du fonctionnement du tube. Ainsi, le flux injecté d'hélium froid est concentré le long de la fibre optique 1 au lieu d'être en partie injecté plus loin de la fibre optique 1 comme par exemple dans le cas d'un orifice circulaire ce qui le rend moins efficace. Par rapport à un orifice circulaire de section faible et de débit élevé, à débit global équivalent, l'orifice de forme allongée présente encore l'avantage de répartir le flux gazeux injecté le long de la fibre optique 1 qui ainsi vibre moins. La plus grande dimension est comprise de préférence entre une fois et demie et quatre fois la plus petite dimension, et avantageusement entre deux fois et trois fois la plus petite dimension, ce qui permet une efficacité augmentée de l'injection d'hélium tout en conservant un débit raisonnable et en évitant une petite dimension trop faible ce qui peut aussi présenter des inconvénients. La plus petite dimension est avantageusement inférieure à 1mm ; la plus grande dimension est avantageusement comprise entre 1mm et 5mm. A titre d'exemple, la plus petite dimension vaut 0,5mm tandis que la plus grande dimension vaut 1,5mm, l'orifice 30 ayant alors une forme oblongue ou ovale. L'avantage d'un orifice 30 allongé plutôt que circulaire serait d'élargir les pics P1 à P5 de la figure 3, ce qui est intéressant car, ces pics étant très élevés mais très étroits, cela permettrait d'augmenter l'intégrale de la courbe h et donc l'efficacité globale des échanges thermiques entre la fibre optique 1 et le fluide gazeux environnant et par conséquent l'efficacité de refroidissement de la fibre optique 1 par le tube de refroidissement. Ce type d'orifice 30 de forme allongée peut même s'appliquer à d'autres tubes de refroidissement qu'à celui selon l'invention.

De préférence, afin de casser la couche limite de la manière la plus efficace et la plus complète, l'angle d'injection est compris entre 30 degrés et 60 degrés, il vaut par exemple environ 45 degrés, l'angle d'injection étant l'angle d'orientation des canaux 3 d'injection au niveau de leur orifice 30. Lorsque l'angle d'injection est plus proche de 90 degrés, par exemple vaut 75 degrés, les vecteurs vitesse de déplacement de la fibre optique 1 et vitesse de déplacement de l'hélium froid injecté se combinent de manière moins efficace pour casser la couche limite 7. Lorsque l'angle d'injection est plus proche de 0 degrés, par exemple vaut 15 degrés, la distance à parcourir pour l'hélium froid injecté avant d'atteindre la fibre optique 1 devient trop importante. Un bon compromis optimisé se situe aux alentours d'un angle d'injection de 45 degrés.

De préférence, le tube comprend au moins dix groupes d'aspiration, par exemple douze, et pour au moins la moitié des groupes d'aspiration situés le plus loin des extrémités du tube, par exemple les six groupes d'aspiration les plus centraux, le fluide gazeux aspiré est soit directement réinjecté, éventuellement mélangé avec une proportion plus ou moins importante d'Hélium pur pour conserver le débit, soit recyclé, tandis que, pour au moins chaque groupe d'aspiration situé le plus près d'une extrémité du tube, par exemple les trois groupes d'aspiration situés près de chaque extrémité, le fluide gazeux aspiré n'est ni directement réinjecté ni recyclé. Le principe est le suivant. Quand le fluide gazeux circule dans la cavité interne 2 situé au niveau d'un module suffisamment central pour être peu ou pas contaminé par de l'air, ce fluide gazeux est recyclé ou réinjecté de manière avantageuse, tandis que quand le fluide gazeux circule dans la cavité interne 2 situé au niveau d'un module suffisamment extrémal pour être substantiellement contaminé par de l'air, ce fluide gazeux est éliminé de manière avantageuse. Ainsi, au moins une partie de l'hélium utilisé n'est pas perdue, et peut être à nouveau utilisée à peu de frais.

De préférence, le tube est constitué d'un nombre relativement élevé de modules relativement petits comprenant chacun un seul groupe d'injection et un seul groupe d'aspiration, de manière à la fois à rendre le tube aisément fabricable, nettoyable et manipulable, et à optimiser la longueur d'échange thermique entre l'injection d'hélium froid sur la fibre optique 1 et l'aspiration d'hélium devenu chaud hors du voisinage de la fibre optique 1, de manière à rendre ces échanges thermiques entre hélium et fibre optique 1 le plus efficaces possibles. C'est pourquoi la distance, le long du tube, entre un canal d'injection et un canal d'aspiration est choisie inférieure à 100mm, et elle est de préférence comprise entre 10mm et 50mm, ce qui correspond à une hauteur H de module approximativement comprise entre 20mm et 60mm. Le découpage du tube en modules permet même la fabrication de tubes de longueur différentes comportant un nombre différent de ces modules tous identiques entre eux, pour un surcoût relativement faible. Le découpage en modules permet également de désactiver certains modules en arrêtant la circulation d'hélium dedans lorsque la vitesse de fibrage est inférieure à la vitesse nominale pour laquelle le tube de refroidissement complet avec tous ses modules a été prévu. La taille d'un module pour un exemple numérique préférentiel de l'invention, c'est-à-dire sa hauteur H, étant de 40mm, la longueur du tube complet correspondant comprenant douze modules vaut approximativement un demi mètre, et la hauteur de refroidissement étant d'environ 2m, il est avantageusement prévu d'utiliser quatre tubes en série, soudés entre eux ou non, chaque tube ayant une longueur d'environ un demi-mètre, sur une tour de fibrage. On peut aussi utiliser un tube d'environ deux mètres comportant une cinquantaine de modules.

De préférence, chaque groupe d'injection est constitué soit par un canal 3 d'injection soit par plusieurs canaux 3 d'injection de même position axiale par rapport au tube et de position radiale régulièrement distribuée par rapport au tube et chaque groupe d'aspiration est constitué soit par un canal 4 d'aspiration soit par plusieurs canaux 4 d'aspiration de même position axiale par rapport au tube et de position radiale régulièrement distribuée par rapport au tube. Dans le cas où les groupes ne sont constitués que d'un seul canal, il est préférable qu'il y ait une alternance des canaux d'un même type, injection ou aspiration, le long du tube pour éviter un risque de vibration trop importante de la fibre optique 1 en compensant un peu au-dessus ou un peu au-dessous la force exercée par le canal sur la fibre optique 1. Pour éviter ce risque de vibration trop importante de la fibre optique 1 en compensant au même endroit la force exercée par le canal sur la fibre optique 1, il est plus avantageux que chaque groupe comporte plusieurs canaux, c'est-à-dire deux ou plus, l'ensemble de ces canaux présentant une symétrie axiale d'axe la fibre optique 1 lors du fonctionnement du tube, ce qui correspond aussi à l'axe du tube.

De préférence, afin de simplifier la fabrication et la maintenance du tube, tous les canaux 3 d'injection sont reliés à un canal d'alimentation commun et tous les canaux 4 d'aspiration sont reliés à un canal d'évacuation commun, ce qui permet de minimiser la dimension de la longueur propre de chaque canal d'injection 3 ou d'aspiration 4.

Sur la figure 2, afin de faciliter l'extraction de l'air ou de l'hélium chaud, entre chaque groupe d'injection et chaque groupe d'aspiration, la cavité interne s'élargit de manière à former une chambre. Une certaine amélioration de l'efficacité de l'aspiration est réalisée au détriment d'une certaine dégradation de l'efficacité de l'injection. Pour privilégier au contraire l'efficacité d'injection et l'augmenter, entre chaque groupe d'injection et chaque groupe d'aspiration, la cavité interne se rétrécit de manière à former un goulot d'étranglement.

## Revendications

1. Tube de refroidissement de fibre optique comprenant une cavité interne destinée à être traversée par une fibre optique et un ensemble de canaux d'injection qui sont répartis le long du tube, qui débouchent dans la cavité et qui sont orientés à contre-courant par rapport au sens de défilement de la fibre optique, **caractérisé en ce que** les canaux d'injection sont alternée avec des canaux d'aspiration tous orientés à contre-courant du sens de défilement de la fibre optique

2. Tube de refroidissement de fibre optique selon la revendication 1, **caractérisé en ce que** la section droite de la cavité est suffisamment étroite au niveau des canaux d'injection pour que, lors du fonctionnement du tube, la surface extérieure de la couche limite de fluide gazeux véhiculée par la fibre optique y soit plus proche des parois de la cavité que de la surface extérieure de la fibre optique.

3. Tube de refroidissement de fibre optique selon la revendication 1, **caractérisé en ce que** le tube comprend aussi un ensemble de canaux d'aspiration qui sont répartis le long du tube, qui débouchent dans la cavité et qui sont orientés à contre-courant par rapport au sens de défilement de la fibre optique, les groupes d'injection, au moins au nombre de trois et comprenant chacun un ou plusieurs canaux d'injection, alternant le long du tube avec les groupes d'aspiration, au moins au nombre de trois et comprenant chacun un ou plusieurs canaux d'aspiration, les seules ouvertures du tube sur l'extérieur étant les canaux d'injection, les canaux d'aspiration et les extrémités du tube.

4. Tube de refroidissement de fibre optique selon la revendication 1, **caractérisé en ce que** la section droite de la cavité étant suffisamment étroite au niveau des canaux d'injection pour que la surface extérieure de la couche limite de fluide gazeux véhiculée par la fibre optique y soit plus proche des parois de la cavité que de la surface extérieure de la fibre optique, et **en ce que** le tube comprend aussi un ensemble de canaux d'aspiration qui sont répartis le long du tube, qui débouchent dans la cavité et qui sont orientés à contre-courant par rapport au sens de défilement de la fibre optique, les groupes d'injection, au moins au nombre de trois et comprenant chacun un ou plusieurs canaux d'injection, alternant le long du tube avec les groupes d'aspiration, au moins au nombre de trois et comprenant chacun un ou plusieurs canaux d'aspiration, les seules ouvertures du tube sur l'extérieur étant les canaux d'injection, les canaux d'aspiration et les extrémités du tube.

5. Tube de refroidissement de fibre optique selon l'une quelconque des revendications 3 à 4, **caractérisé en ce que** chaque groupe d'injection est constitué soit par un canal d'injection soit par plusieurs canaux d'injection de même position axiale par rapport au tube et de position radiale régulièrement distribuée par rapport au tube et **en ce que** chaque groupe d'aspiration est constitué soit par un canal d'aspiration soit par plusieurs canaux d'aspiration de même position axiale par rapport au tube et de position radiale régulièrement distribuée par rapport au tube.

6. Tube de refroidissement de fibre optique selon l'une quelconque des revendications 3 à 5, **caractérisé en ce que** tous les canaux d'injection sont reliés à un canal d'alimentation commun et **en ce que** tous les canaux d'aspiration sont reliés à un canal d'évacuation commun.

7. Tube de refroidissement de fibre optique selon l'une quelconque des revendications 3 à 6, **caractérisé en ce que**, entre chaque groupe d'injection et chaque groupe d'aspiration, la cavité interne s'élargit de manière à former une chambre.

8. Tube de refroidissement de fibre optique selon l'une quelconque des revendications 3 à 6, **caractérisé en ce que**, entre chaque groupe d'injection et chaque groupe d'aspiration, la cavité interne se rétrécit de manière à former un goulot d'étranglement.

9. Tube de refroidissement de fibre optique selon l'une quelconque des revendications 3 à 8, **caractérisé en ce que** la distance, le long du tube, entre un canal d'injection et un canal d'aspiration est inférieure à 100mm.

10. Tube de refroidissement de fibre optique selon la revendication 9, **caractérisé en ce que** la distance, le long du tube, entre un canal d'injection et un canal d'aspiration est comprise entre 10mm et 50mm.

11. Tube de refroidissement de fibre optique selon l'une quelconque des revendications 3 à 10, **caractérisé en ce que** le tube comprend au moins dix groupes d'aspiration, **en ce que**, pour au moins la moitié des groupes d'aspiration situés le plus loin des extrémités du tube, le fluide gazeux aspiré est soit directement réinjecté soit recyclé, et **en ce que**, pour au moins chaque groupe d'aspiration situé le plus près d'une extrémité du tube, le fluide gazeux aspiré n'est ni directement réinjecté ni recyclé.

12. Tube de refroidissement de fibre optique selon l'une quelconque des revendications 3 à 11, **caractérisé en ce qu'**il est constitué de plusieurs modules comprenant chacun un seul groupe d'injection et un seul groupe d'aspiration.

13. Tube de refroidissement de fibre optique selon l'une quelconque des revendications précédentes, **caractérisé en ce que** la surface de la section droite de la cavité au niveau des canaux d'injection est comprise entre 3 mm² et 10 mm².

14. Tube de refroidissement de fibre optique selon l'une quelconque des revendications précédentes, **caractérisé en ce que** les canaux d'injection débouchent au niveau des parois de la cavité.

15. Tube de refroidissement de fibre optique selon l'une quelconque des revendications précédentes, **caractérisé en ce que** l'orifice des canaux d'injection présente une forme allongée, la plus grande dimension dudit orifice étant selon l'axe du tube et la plus petite dimension dudit orifice étant selon la section droite du tube.

16. Tube de refroidissement de fibre optique selon la revendication 15, **caractérisé en ce que** la plus grande dimension est comprise entre une fois et demie et quatre fois la plus petite dimension.

17. Tube de refroidissement de fibre optique selon la revendication 16, **caractérisé en ce que** la plus grande dimension est comprise entre deux fois et trois fois la plus petite dimension.

18. Tube de refroidissement de fibre optique selon l'une quelconque des revendications 15 à 17, **caractérisé en ce que** la plus petite dimension est inférieure à 1mm.

19. Tube de refroidissement de fibre optique selon l'une quelconque des revendications 15 à 18, **caractérisé en ce que** la plus grande dimension est comprise entre 1mm et 5mm.

20. Tube de refroidissement de fibre optique selon l'une quelconque des revendications précédentes, **caractérisé en ce que** l'angle d'injection est compris entre 30 degrés et 60 degrés.

21. Tube de refroidissement de fibre optique selon la revendication 20, **caractérisé en ce que** l'angle d'injection vaut environ 45 degrés.

## Claims

1. Tube for cooling optical fibre, comprising an internal cavity intended for an optical fibre to pass through and a set of injection channels which are distributed along the tube, which open into the cavity and which are oriented counter to the direction of advancement of the optical fibre, **characterised in that** the injection channels alternate with aspiration channels all of which are oriented counter to the direction of advancement of the optical fibre.

2. Tube for cooling optical fibre, in accordance with claim 1, **characterised in that** the cross-section of the cavity is sufficiently narrow at the level of the injection channels that, in operation of the tube, the outer surface of the boundary layer of gaseous fluid carried along by the optical fibre is closer there to the walls of the cavity than to the outer surface of the optical fibre.

3. Tube for cooling optical fibre, in accordance with claim 1, **characterised in that** the tube also comprises a set of aspiration channels which are distributed along the tube, which open into the cavity and which are oriented counter to the direction of advancement of the optical fibre, the injection groups - which number at least three and each of which comprises one or more injection channels - alternating along the tube with the aspiration groups - which number at least three and each of which comprises one or more aspiration channels -, the only openings from the tube to the exterior being the injection channels, the aspiration channels and the ends of the tube.

4. Tube for cooling optical fibre, in accordance with claim 1, **characterised in that** the cross-section of the cavity is sufficiently narrow at the level of the injection channels that the outer surface of the boundary layer of gaseous fluid carried along by the optical fibre is closer there to the walls of the cavity than to the outer surface of the optical fibre, and **in that** the tube also comprises a set of aspiration channels which are distributed along the tube, which open into the cavity and which are oriented counter to the direction of advancement of the optical fibre, the injection groups - which number at least three and each of which comprises one or more injection channels - alternating along the tube with the aspiration groups - which number at least three and each of which comprises one or more aspiration channels -, the only openings from the tube to the exterior being the injection channels, the aspiration channels and the ends of the tube

5. Tube for cooling optical fibre, in accordance with any one of claims 3 to 4, **characterised in that** each injection group is composed either of one injection channel or of a plurality of injection channels having the same axial positions with respect to the tube and having regularly distributed radial positions with respect to the tube and **in that** each aspiration group is composed either of one aspiration channel or of a plurality of aspiration channels having the same axial positions with respect to the tube and having regularly distributed radial positions with respect to the tube.

6. Tube for cooling optical fibre, in accordance with any one of claims 3 to 5, **characterised in that** all the injection channels are in communication with a common supply channel and **in that** all the aspiration channels are in communication with a common evacuation channel.

7. Tube for cooling optical fibre, in accordance with any one of claims 3 to 6, **characterised in that** the internal cavity widens out between each injection group and each aspiration group so as to form a chamber.

8. Tube for cooling optical fibre, in accordance with any one of claims 3 to 6, **characterised in that** the internal cavity narrows between each injection group and each aspiration group so as to form a throttling neck.

9. Tube for cooling optical fibre, in accordance with any one of claims 3 to 8, **characterised in that** the distance along the tube between an injection channel and an aspiration channel is less than 100 mm.

10. Tube for cooling optical fibre, in accordance with claim 9, **characterised in that** the distance along the tube between an injection channel and an aspiration channel is between 10 mm and 50 mm inclusive.

11. Tube for cooling optical fibre, in accordance with any one of claims 3 to 10, **characterised in that** the tube comprises at least ten aspiration groups, **in that**, for at least half the aspiration groups located furthest away from the ends of the tube, the gaseous fluid aspirated is either directly reinjected or recycled, and **in that**, for at least each aspiration group located closest to an end of the tube, the gaseous fluid aspirated is neither directly reinjected nor recycled.

12. Tube for cooling optical fibre, in accordance with any one of claims 3 to 11, **characterised in that** it is composed of a plurality of modules each comprising a single injection group and a single aspiration group.

13. Tube for cooling optical fibre, in accordance with any one of the preceding claims, **characterised in that** the cross-sectional area of the cavity at the level of the injection channels is between 3 mm² and 10 mm² inclusive.

14. Tube for cooling optical fibre, in accordance with any one of the preceding claims, **characterised in that** the injection channels open at the level of the walls of the cavity.

15. Tube for cooling optical fibre, in accordance with any one of the preceding claims, **characterised in that** the orifices of the injection channels have an elongate shape, the largest dimension of said orifices being along the axis of the tube and the smallest dimension of said orifices being along the cross-section of the tube.

16. Tube for cooling optical fibre, in accordance with claim 15, **characterised in that** the largest dimension is between one and half times and four times the smallest dimension, inclusive.

17. Tube for cooling optical fibre, in accordance with claim 16, **characterised in that** the largest dimension is between two times and three times the smallest dimension, inclusive.

18. Tube for cooling optical fibre, in accordance with any one of claims 15 to 17, **characterised in that** the smallest dimension is less than 1 mm.

19. Tube for cooling optical fibre, in accordance with any one of claims 15 to 18, **characterised in that** the largest dimension is between 1 mm and 5 mm.

20. Tube for cooling optical fibre, in accordance with any one of the preceding claims, **characterised in that** the injection angle is between 30 degrees and 60 degrees inclusive.

21. Tube for cooling optical fibre, in accordance with claim 20, **characterised in that** the injection angle is about 45 degrees.

## Patentansprüche

1. Kühlungsrohr für eine optische Faser, das einen inneren Hohlraum, der dazu bestimmt ist, von einer optischen Faser durchquert zu werden, und eine Anordnung von Injektionskanälen aufweist, die entlang des Rohres verteilt sind, die in dem Hohlraum enden und die in Gegenrichtung bezüglich der Abspulrichtung der optischen Faser ausgerichtet sind, **dadurch gekennzeichnet, dass** die Injektionskanäle sich mit Absaugkanälen abwechseln, die alle in Gegenrichtung zur Abspulrichtung der optischen Faser ausgerichtet sind.

2. Kühlungsrohr für eine optische Faser nach Anspruch 1, **dadurch gekennzeichnet dass** der Querschnitt des Hohlraums auf Höhe der Injektionskanäle ausreichend eng ist, damit, beim Betrieb des Rohres, die äußere Oberfläche der Grenzschicht des von der optischen Faser durchlaufenen gasförmigen Stromes dort den Wänden des Hohlraums näher ist als der äußeren Oberfläche der optischen Faser.

3. Kühlungsrohr für eine optische Faser nach Anspruch 1, **dadurch gekennzeichnet, dass** das Rohr auch eine Anordnung von Absaugkanälen aufweist, die entlang des Rohres verteilt sind, die in der Vertiefung enden und in Gegenrichtung bezüglich der Abspulrichtung der optischen Faser ausgerichtet sind, wobei die Injektionsgruppen, wenigstens drei an der Zahl mit jeweils einem oder mehreren Injektionskanälen, entlang des Rohres sich mit den Absauggruppen abwechseln, die wenigstens drei an der Zahl sind und jeweils einen oder mehrere Absaugkanäle aufweisen, wobei die einzigen Öffnungen des Rohres nach außen die Injektionskanäle, die Absaugkanäle und die Enden des Rohres sind.

4. Kühlungsrohr für eine optische Faser nach Anspruch 1, **dadurch gekennzeichnet, dass** der Querschnitt des Hohlraums auf Höhe der Injektionskanäle ausreichend eng ist, damit die äußere Oberfläche der Grenzschicht des von der optischen Faser durchlaufenen gasförmigen Stromes dort den Wänden des Hohlraums näher ist als der äußeren Oberfläche der optischen Faser, und dass das Rohr außerdem eine Anordnung von Absaugkanälen aufweist, die entlang des Rohres verteilt sind, die in dem Hohlraum enden und in Gegenrichtung bezüglich der Abspulrichtung der optischen Faser ausgerichtet sind, wobei die Injektionsgruppen, wenigstens drei an der Zahl, mit jeweils einem oder mehreren Injektionskanälen, sich entlang des Rohres mit den Absauggruppen abwechseln, die wenigstens drei an der Zahl sind und jeweils einen oder mehrere Absaugkanäle aufweisen, wobei die einzigen Öffnungen des Rohres nach außen die Injektionskanäle, die Absaugkanäle und die Enden des Rohres sind.

5. Kühlungsrohr für eine optische Faser nach einem der Ansprüche 3 bis 4, **dadurch gekennzeichnet, dass** jede Injektionsgruppe entweder durch einen Injektionskanal oder durch mehrere Injektionskanäle mit gleicher axialer Position bezüglich des Rohres und mit gleichmäßig bezüglich des Rohres verteilter radialer Position gebildet ist, und dass jede Absauggruppe entweder durch einen Absaugkanal oder durch mehrere Absaugkanäle mit gleicher axialer Position bezüglich des Rohres und mit gleichmäßig bezüglich des Rohres verteilter radialer Position gebildet ist.

6. Kühlungsrohr für eine optische Faser nach einem der Ansprüche 3 bis 5, **dadurch gekennzeichnet, dass** alle Injektionskanäle mit einem gemeinsamen Zufuhrkanal verbunden sind, und dass alle Absaugkanäle mit einem gemeinsamen Abführkanal verbunden sind.

7. Kühlungsrohr für eine optische Faser nach einem der Ansprüche 3 bis 6, **dadurch gekennzeichnet, dass** zwischen jeder Injektionsgruppe und jeder Absauggruppe der innere Hohlraum sich so weitet, dass er eine Kammer bildet.

8. Kühlungsrohr für eine optische Faser nach einem der Ansprüche 3 bis 6, **dadurch gekennzeichnet, dass** zwischen jeder Injektionsgruppe und jede Absauggruppe der innere Hohlraum sich so verengt, dass er einen Engpass bildet.

9. Kühlungsrohr für eine optische Faser nach einem der Ansprüche 3 bis 8, **dadurch gekennzeichnet, dass** der Abstand zwischen einem Injektionskanal und einem Absaugkanal entlang des Rohres kleiner als 100 mm ist.

10. Kühlungsrohr für eine optische Faser nach Anspruch 9, **dadurch gekennzeichnet, dass** der Abstand zwischen einem Injektionskanal und einem Absaugkanal entlang des Rohres zwischen 10 mm und 50 mm beträgt.

11. Kühlungsrohr für eine optische Faser nach einem der Ansprüche 3 bis 10, **dadurch gekennzeichnet, dass** das Rohr wenigstens zehn Absauggruppen aufweist und dass, für wenigstens die Hälfte der Absauggruppen, die von den Enden des Rohres am weitesten entfernt liegen, der abgesaugte, gasförmige Strom entweder direkt reinjiziert oder recycelt wird, und dass, für wenigstens jede Absauggruppe, die einem Ende des Rohres am nächsten liegt, der abgesaugte, gasförmige Strom weder direkt reinjiziert noch recycelt wird.

12. Kühlungsrohr für eine optische Faser nach einem der Ansprüche 3 bis 11, **dadurch gekennzeichnet, dass** es aus mehreren Modulen gebildet ist, die jeweils eine einzige Injektionsgruppe und eine einzige Absauggruppe aufweisen.

13. Kühlungsrohr für eine optische Faser nach einem der vorhergehenden Ansprüche, **dadurch gekennzeichnet, dass** die Querschnittsfläche des Hohlraums auf Höhe der Injektionskanäle zwischen 3 mm² und 10 mm² beträgt.

14. Kühlungsrohr für eine optische Faser nach einem der vorhergehenden Ansprüche, **dadurch gekennzeichnet, dass** die Injektionskanäle auf Höhe der Wände des Hohlraums enden.

15. Kühlungsrohr für eine optische Faser nach einem der vorhergehenden Ansprüche, **dadurch gekennzeichnet, dass** die Öffnung der Injektionskanäle eine längliche Form aufweist, wobei die größte Ausdehnung der Öffnung entlang der Achse des Rohres verläuft und die kleinste Ausdehnung der Öffnung entlang des Querschnitts des Rohres verläuft.

16. Kühlungsrohr für eine optische Faser nach Anspruch 15, **dadurch gekennzeichnet, dass** die größte Ausdehnung zwischen dem 1,5- und 4-Fachen der kleinsten Ausdehnung beträgt.

17. Kühlungsrohr für eine optische Faser nach Anspruch 16, **dadurch gekennzeichnet, dass** die größte Ausdehnung zwischen dem 2-Fachen und dem 3-Fachen der kleinsten Ausdehnung beträgt.

18. Kühlungsrohr für eine optische Faser nach einem der Ansprüche 15 bis 17, **dadurch gekennzeichnet, dass** die kleinste Ausdehnung kleiner als 1 mm ist.

19. Kühlungsrohr für eine optische Faser nach einem der Ansprüche 15 bis 18, **dadurch gekennzeichnet, dass** die größte Ausdehnung zwischen 1 mm und 5 mm beträgt.

20. Kühlungsrohr für eine optische Faser nach einem der vorhergehenden Ansprüche, **dadurch gekennzeichnet, dass** der Injektionswinkel zwischen 30° und 60° beträgt.

21. Kühlungsrohr für eine optische Faser nach Anspruch 20, **dadurch gekennzeichnet, dass** der Injektionswinkel etwa 45° beträgt.
